(19) Europäisches Patentamt / European Patent Office / Office européen des brevets

(11) **EP 2 806 114 B1**

(12) **EUROPEAN PATENT SPECIFICATION**

(45) Date of publication and mention
of the grant of the patent:
**15.08.2018 Bulletin 2018/33**

(51) Int Cl.:
*F01K 13/02* (2006.01)    *F01K 23/06* (2006.01)
*F22B 1/18* (2006.01)

(21) Application number: **13169206.3**

(22) Date of filing: **24.05.2013**

(54) **Combined cycle duct firing control**

Kombinierte Zyklus-Kanalfeuerungssteuerung

Commande d'allumage de conduit à cycle combiné

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.11.2014 Bulletin 2014/48**

(73) Proprietor: **Honeywell spol s.r.o.**
**14800 Prague 4 (CZ)**

(72) Inventors:
• **Havlena, Vladimir**
**182 00 Prague 8 (CZ)**
• **Basus, Ondrej**
**17000 Prague 7 (CZ)**

(74) Representative: **Houghton, Mark Phillip**
**Patent Outsourcing Limited**
**1 King Street**
**Bakewell, Derbyshire DE45 1DZ (GB)**

(56) References cited:
**WO-A1-2008/107916     US-A- 4 478 039**
**US-A- 6 141 956**

## Description

Background

Combined cycle (CC) units include a gas turbine (GT) and a heat recovery steam generator (HRSG) with or without duct firing. CC units are increasingly used in industrial energy plants as they provide significantly higher efficiency compared to classical single (Rankine) cycle boiler-steam turbine based systems. In essence, a gas turbine is used to power an electrical generator to produce electricity The gas turbine has an exhaust from burning gas, such as natural gas, at significantly higher temperature than the boiling point of water. Heat from the exhaust is recovered via HRSG which involves using the exhaust to heat water in a steam generator such as a boiler to create steam. The steam is used to power a second turbine, such as a steam turbine coupled to a further generator, to generate more electrical power from exhaust. Otherwise, the exhaust would simply be vented to atmosphere, with no additional power generated, resulting in a decrease in overall efficiency.

One way to further increase the output power of a CC unit is to add heat to the exhaust gas from the gas turbine and generate more steam by using duct firing. In essence, gas is burned to produce heat used to increase the heat content of the flue gas entering the HRSG to generate more steam and produce more energy via the second steam turbine. Duct firing provides a degree of freedom to be used by an operator of a steam plant to control and optimize the output power and performance of the steam plant.

US4478039 discloses a combined cycle powerplant utilizing coal as the fuel in which a gasifier is used to generate gas for a gas turbine to generate electricity and the waste heat from the gas turbine is used with an auxiliary combustor in the form of a fluidized bed combustor to produce steam to drive a steam generator to generate electricity. The efficiency of the combined cycle is a function of the gasifier and the steam turbine.

US4478039 discloses a combined cycle powerplant utilizing coal as the fuel in which a gasifier is used to generate gas for a gas turbine to generate electricity and the waste heat from the gas turbine is used with an auxiliary combustor in the form of a fluidized bed combustor to produce steam to drive a steam generator to generate electricity. The efficiency of the combined cycle is a function of the gasifier and the steam turbine.

Summary

The present invention provides a method as defined in claim 1. The method may include the features of any one or more of dependent claims 2 to 6.

The present invention also provides a unit as defined in claim 7. The unit may include the features of any one or more of dependent claims 8 to 11.

Brief Description of the Drawings

FIG. 1 is a block diagram of a combined cycle system utilizing a heat recovery steam generator with a corrected efficiency curve according to an example embodiment.
FIG. 2 is a graph illustrating a standard efficiency curve according to an example embodiment.
FIG. 3 is a graph illustrating an estimation of steam generated via a gas turbine according to an example embodiment.
FIG. 4 is a graph illustrating a corrected efficiency curve according to an example embodiment.
FIG. 5 is a graph illustrating a corrected efficiency model with duct firing according to an example embodiment.
FIG. 6 is a block diagram of an example computer system to perform methods and control according to example embodiments.

Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A system and method facilitate calculation of a corrected efficiency model of duct firing that enables decoupling the impact of an external source of residual heat in a gas turbine (GT) exhaust gas from the impact of duct firing usage. The corrected efficiency model enables simplified economic optimization of a steam plant with combined cycle (CC) units (economic load allocation) that can be running in closed loop in real time and results in real time responsiveness of the steam plant load allocation to current steam production and electric power generation demands. Duct firing with a corrected efficiency curve can be used as a standard boiler operating in parallel to other units.

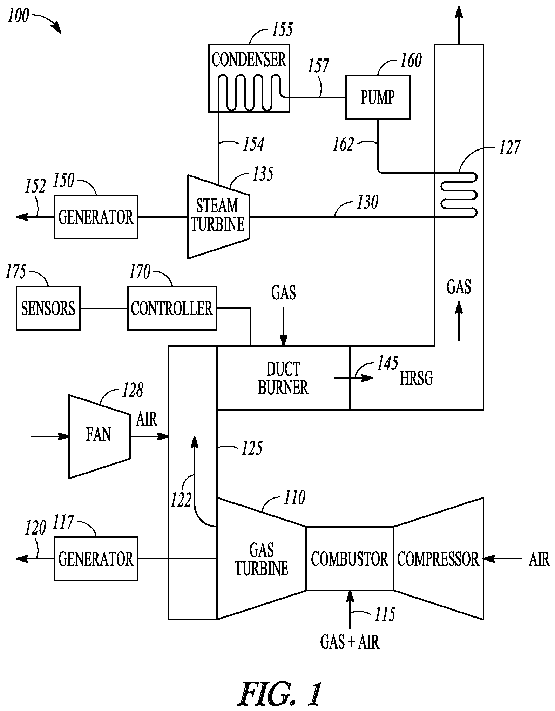

FIG. 1 is a block diagram of a combined cycle electrical generator 100. A gas turbine 110 burns gas 115 to turn a first generator 117 and produce electricity 120. Excess heat 122 from the gas turbine is provided to a duct 125 to heat water in a heat exchanger 127 to provide steam at 130 to a steam turbine 135. An optional fan 128 may be used to provide air to the duct 125 when needed. Additional heat is provided via a duct burner 140 that burns gas 142 to produce additional heat 145 in the duct 125 to produce additional steam.

The steam turbine 135 turns a second generator 150 that produces electricity 152. Together, the generation of electricity from the gas turbine and the steam turbine represent the combined cycle. Steam 154 from the steam turbine 135 is provided to a condenser 155 where it is condensed to water 157 and pumped via a pump 160 back via 162 to the heat exchanger 127 to be turned back into steam. A controller 170 receives information from a plurality of sensors 175 and is coupled to control the duct burner 140 in accordance with a control algorithm utilizing a corrected efficiency curve for the components of system 100 that generate electricity from steam, referred to as heat recovery steam generator (HRSG), that is effectively decoupled from the efficiency curve of the gas turbine. The controller controls the duct burner 140 to meet specified electrical demands based on the corrected efficiency curve.

In one embodiment, the sensors 175 are coupled to obtain information about the temperature and corresponding heat provided at various stages of HRSG, such as the waste heat, and heat produced by duct firing. Further sensors are used to sense the amount of steam produced at various positions in the HRSG to facilitate calculation and use of the corrected efficiency curve.

In one example embodiment, a combined cycle unit may consist of several gas turbines (GTs) and one or more HRSG units. The corrected efficiency curve may be used to optimize the load allocated to the CC unit against the other generators available (other boilers/turbines/CC units) to optimize the overall steam plant performance (economic load allocation). By using the corrected efficiency curve for each CC unit, equal incremental cost of generation by all the CC units running in parallel may be obtained by evaluating the incremental cost of generation from the increased duct firing.

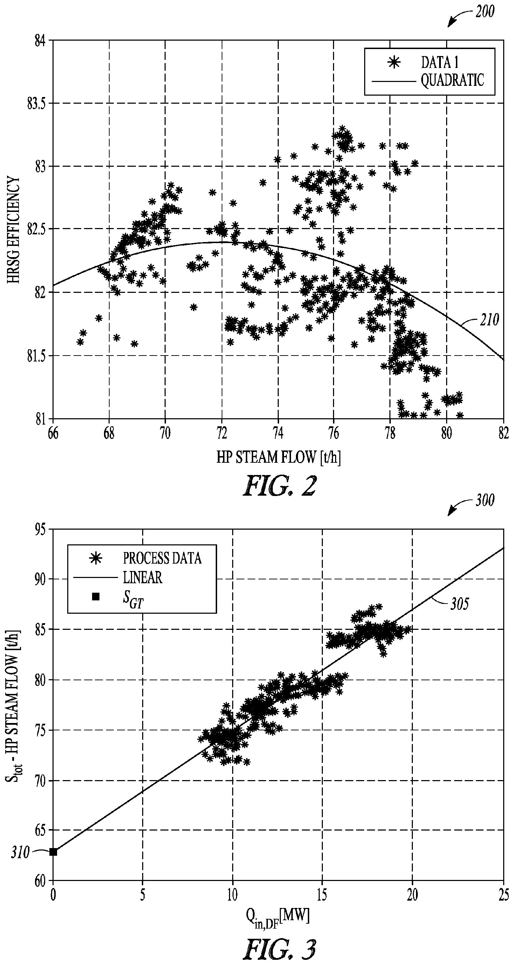

Based on process data, the standard HRSG efficiency curve was derived from example process data as illustrated in FIG. 2, where HRSG efficiency, $\eta$, is plotted versus steam flow at 200. Both data points, and a resulting curve 210 corresponding to the following equation are shown:

$$\eta = -0.0093876 \times S^2 + 1.3535 \times S + 33.604$$

where $S$ is steam flow.

To simulate constant operation of GT necessary for the analysis, the gas turbine (GT) heat outlet process data were filtered to contain only values of heat, $Q_{out,\,GT}$ > 80 MW and $Q_{out,\,GT}$ < 81 MW. Then, the theoretical value $S_{GT}$ (steam that would be produced by the GT with no duct firing (DF) present) can be extrapolated from the $Q_{in,\,DF}$ vs. $S_{tot}$ dependence as shown at 300 in FIG. 3, wherein the total steam flow in tons/hour (t/h) is plotted against the heat produced from duct firing at line 305. The resulting steam from the gas turbine was found to be $S_{GT}$ = 62.8 t/h as indicated at 310.

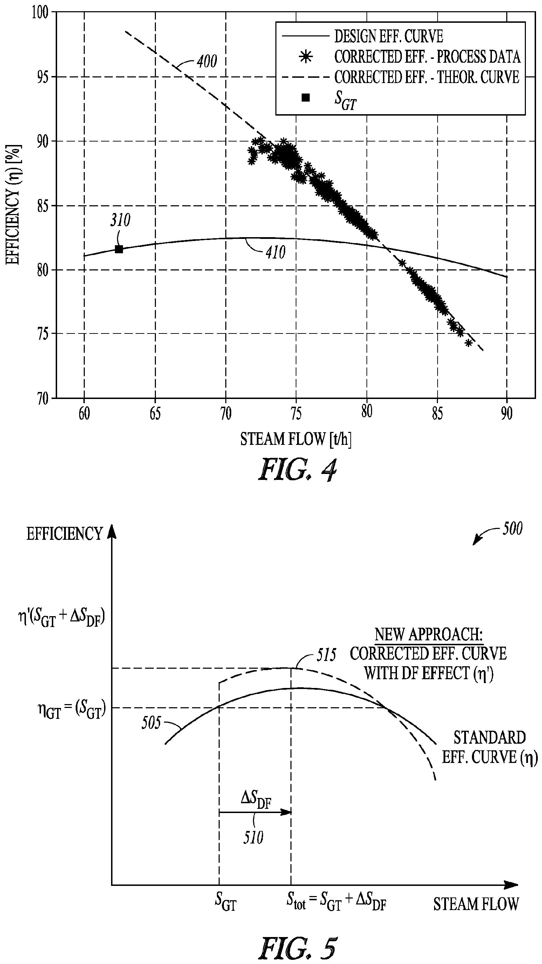

The resulting corrected efficiency curve for DF is depicted at line 400 in FIG. 4. The points represent example process data. Line 400 was calculated using linear approximation from FIG. 3 to cover whole range of steam flow. Note that the corrected efficiency has descending character with no maximum point - this is due to $Q_{in,\,GT}/Q_{in,\,DF}$ ratio, which is relatively large in this case. The designed efficiency curve is indicated at line 410, and incudes point 310, corresponding to steam generated from the gas turbine alone.

An algorithm for determining the efficiency curve generated for duct firing is now described. In a common boiler without duct firing (DF), there would be a typical HRSG efficiency curve 210 dependent on steam flow. The heat transformed into steam, $Q_s$ could be then described as:

$$Q_s = \eta(S_{tot}) \times Q_{in}$$

where $S_{tot}$ is total produced steam, $Q_{in}$ is inlet heat, and $\eta$ is the HRSG efficiency at that point.

Introduction of DF brings another source of inlet heat $Q_S$ into the system:

$$
\begin{aligned}
Q_S &= \eta\left(S_{tot}\right) \cdot \left[Q_{in,GT} + Q_{in,DF}\right] = \\
&= \eta\left(S_{GT}\right) \cdot Q_{in,GT} + \eta\left(S_{tot}\right) \cdot Q_{in,DF} + \left[\eta\left(S_{tot}\right) - \eta\left(S_{GT}\right)\right] \cdot Q_{in,GT} = \\
&= \eta\left(S_{GT}\right) \cdot Q_{in,GT} + \left\{\eta\left(S_{tot}\right) + \left[\eta\left(S_{tot}\right) - \eta\left(S_{GT}\right)\right] \cdot \frac{Q_{in,GT}}{Q_{in,DF}}\right\} \cdot Q_{in,DF}
\end{aligned}
$$

where $Q_{in,GT}$ denotes heat inlet from Gas Turbine (GT), $Q_{in,DF}$ heat inlet from DF and $S_{GT}$ steam that would be produced by the GT with no DF present ($Q_{in,DF} = 0$).

The last expression allows decoupling effects from the GT and DF to the overall HRSG operation efficiency and also allows use of a standard efficiency model for each of the two heat sources separately. Since in many cases, heat from a gas turbine is provided from an external source, with no control of the amount of heat provided, the separation allows for better control of duct firing, which may be the only variable available to control.

Based on previous expressions, introduction of DF has two effects as seen at 500 in FIG. 5, where efficiency is plotted versus steam flow, with curve 505 being a standard efficiency curve.

- Heat from DF produces additional steam $\Delta S_{DF}$ at 510. The corresponding heat transformed into steam can be calculated as:

$$
Q_{S,DF} = \eta(S_{tot}) \cdot Q_{in,DF}
$$

- Heat from DF moves the operating point of the efficiency curve, so the heat coming from the gas turbine (GT) is now transformed into steam with higher efficiency. The corresponding heat transformed into steam through this effect can be written as:

$$
Q_{S,\Delta GT} = \left[\eta(S_{tot}) - \eta(S_{GT})\right] \cdot Q_{in,GT}
$$

To combine both effects, a corrected efficiency $\eta'$ (from curve 515 in FIG. 5) is provided as:

$$
\eta' = \left[\eta + (\eta - \eta_{GT})\frac{Q_{in,GT}}{Q_{in,DF}}\right]
$$

$$
\eta_{GT} = \eta(S_{GT})
$$

Then, an equivalent efficiency model of DF is provided:

$$
Q'_{S,DF} = Q_{S,DF} + Q_{S,\Delta GT} = \eta'(S_{tot}) \cdot Q_{in,DF}
$$

The described method basically creates the corrected curve by magnifying the difference between standard efficiency and efficiency at point $S_{GT}$. Such difference is positive for points where $\eta > \eta_{GT}$ and negative for points where $\eta < \eta_{GT}$.

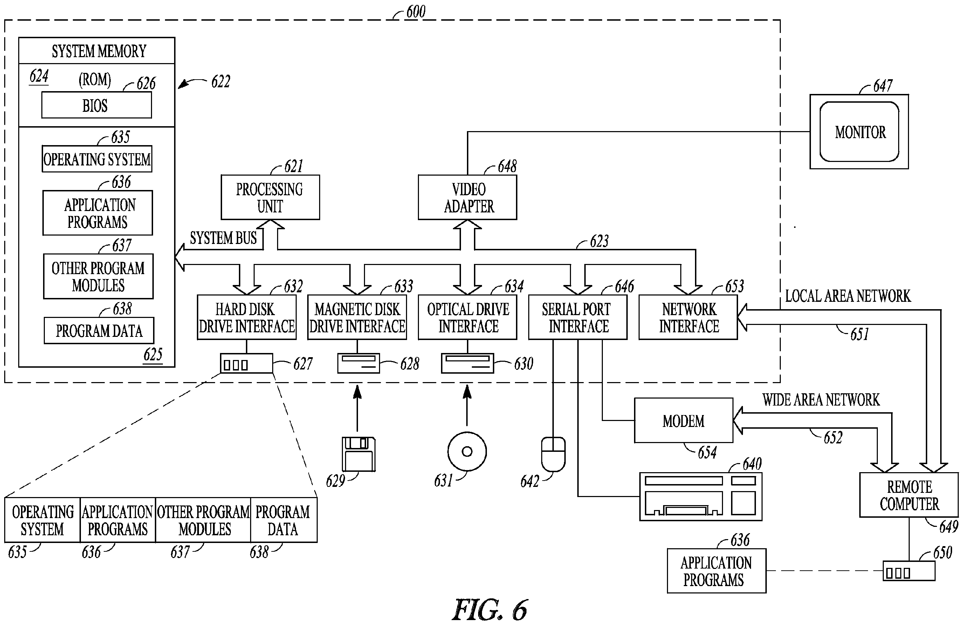

FIG. 6 is a block diagram of a computer system to implement methods and the controller, according to an example embodiment. In the embodiment shown in FIG. 6, a hardware and operating environment is provided that is applicable to any specifically programmed device capable of performing one or more of the methods and control functions described. Many components may be eliminated as they perform functions that may not be relevant to such methods and control functions in various embodiments. Much simpler micro controllers or other electronic processing device may be used in some embodiments.

As shown in FIG. 6, one embodiment of the hardware and operating environment includes a general purpose computing device in the form of a computer 600 (e.g., a personal computer, workstation, or server), including one or more processing units 621, a system memory 622, and a system bus 623 that operatively couples various system components including the system memory 622 to the processing unit 621. There may be only one or there may be more than one processing unit 621, such that the processor of computer 600 comprises a single central-processing unit (CPU), or a plurality of processing units, commonly referred to as a multiprocessor or parallel-processor environment. In various embodiments, computer 600 is a conventional computer, a distributed computer, or any other type of computer.

The system bus 623 can be any of several types of bus structures including a memory bus or memory controller, a peripheral bus, and a local bus using any of a variety of bus architectures. The system memory can also be referred to as simply the memory, and, in some embodiments, includes read-only memory (ROM) 624 and random-access memory (RAM) 625. A basic input/output system (BIOS) program 626, containing the basic routines that help to transfer information between elements within the computer 600, such as during start-up, may be stored in ROM 624. The computer 600 further includes a hard disk drive 627 for reading from and writing to a hard disk, not shown, a magnetic disk drive 628 for reading from or writing to a removable magnetic disk 629, and an optical disk drive 630 for reading from or writing to a removable optical disk 631 such as a CD ROM or other optical media.

The hard disk drive 627, magnetic disk drive 628, and optical disk drive 630 couple with a hard disk drive interface 632, a magnetic disk drive interface 633, and an optical disk drive interface 634, respectively. The drives and their associated computer-readable media provide non volatile storage of computer-readable instructions, data structures, program modules and other data for the computer 600. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 629, optical disk 631, ROM 624, or RAM 625, including an operating system 635, one or more application programs 636, other program modules 637, and program data 638. Programming for implementing one or more processes or method described herein may be resident on any one or number of these computer-readable media.

A user may enter commands and information into computer 600 through input devices such as a keyboard 640 and pointing device 642. Other input devices (not shown) can include a microphone, joystick, game pad, satellite dish, scanner, or the like. These other input devices are often connected to the processing unit 621 through a serial port interface 646 that is coupled to the system bus 623, but can be connected by other interfaces, such as a parallel port, game port, or a universal serial bus (USB). A monitor 647 or other type of display device can also be connected to the system bus 623 via an interface, such as a video adapter 648. The monitor 647 can display a graphical user interface for the user. In addition to the monitor 647, computers typically include other peripheral output devices (not shown), such as speakers and printers.

The computer 600 may operate in a networked environment using logical connections to one or more remote computers or servers, such as remote computer 649. These logical connections are achieved by a communication device coupled to or a part of the computer 600; the invention is not limited to a particular type of communications device. The remote computer 649 can be another computer, a server, a router, a network PC, a client, a peer device or other common network node, and typically includes many or all of the elements described above I/0 relative to the computer 600, although only a memory storage device 650 has been illustrated. The logical connections depicted in FIG. 6 include a local area network (LAN) 651 and/or a wide area network (WAN) 652. Such networking environments are commonplace in office networks, enterprise-wide computer networks, intranets and the internet, which are all types of networks.

When used in a LAN-networking environment, the computer 600 is connected to the LAN 651 through a network interface or adapter 653, which is one type of communications device. In some embodiments, when used in a WAN-networking environment, the computer 600 typically includes a modem 654 (another type of communications device) or any other type of communications device, e.g., a wireless transceiver, for establishing communications over the wide-area network 652, such as the internet. The modem 654, which may be internal or external, is connected to the system bus 623 via the serial port interface 646. In a networked environment, program modules depicted relative to the computer 600 can be stored in the remote memory storage device 650 of remote computer, or server 649. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Examples:

1. A method comprising:

   receiving waste heat from a gas turbine;
   adding heat via duct firing;
   using the received waste heat and added heat via duct firing to create steam;
   driving a steam turbine with the created steam;
   powering an electrical generator via the steam turbine; and
   determining a corrected efficiency curve with effects from the gas turbine decoupled from effects from the duct firing.

2. The method of example 1 wherein duct firing produces additional steam over the waste heat from the gas turbine and wherein the waste heat from the gas turbine creates additional steam with the additional heat provided from duct firing to increase generated power.

3. The method of any of examples 1-2 wherein a standard efficiency curve does not take duct firing into account, and wherein a difference between the standard efficiency curve and an actual efficiency is magnified at a selected amount of gas turbine waste heat, $S_{GT}$ to obtain the corrected efficiency curve.

4. The method of any of examples 1-3 wherein the difference is positive when the standard efficiency is less than the efficiency at $S_{GT}$ and negative when the standard efficiency is greater than the efficiency at $S_{GT}$.

5. The method of any of examples 1-4, wherein an equivalency model of duct firing is defined as:

$$Q'_{S,DF} = Q_{S,DF} + Q_{S,\Delta GT} = \eta'(S_{tot}) \cdot Q_{in,DF}$$

where $Q'_{S,DF}$ is the amount of heat transformed into steam from duct firing with corrected efficiency, $Q_{S,DF}$ is the amount of heat transformed into steam from duct firing, $Q_{S,\Delta GT}$ is the amount of heat transformed into steam by increased efficiency of the heat from the gas turbine, $\eta'(S_{tot})$ is the corrected efficiency for the total of steam produced, and $Q_{in,DF}$ is the heat produced by duct firing.

6. The method of any of examples 1-5 wherein controlling the duct firing is performed by a specifically programmed computer.

7. The method of any of examples 1-6 wherein the corrected efficiency $\eta'$ is calculated in accordance with:

$$\eta' = \left[ \eta + (\eta - \eta_{GT}) \frac{Q_{in,GT}}{Q_{in,DF}} \right]$$

$$\eta_{GT} = \eta(S_{GT})$$

where $\eta$ is a standard efficiency without duct firing, $\eta_{GT}$ is the efficiency of the gas turbine, $Q_{in,GT}$ and $Q_{in,DF}$ are the input heat from the gas turbine and duct firing respectively.

8. A system comprising:

   a duct to receive waste heat;
   a duct firing device coupled to the duct to add heat to the waste heat via duct firing;
   a steam generator to use the received waste heat and added heat via duct firing to create steam;
   a steam turbine coupled to the steam generator;
   an electrical generator coupled to the steam turbine; and
   a controller to control the duct firing as a function of a corrected efficiency curve calculated with effects from the gas turbine decoupled from effects from the duct firing.

9. The system of example 8 wherein heat added by the duct firing device produces additional steam over the waste heat and wherein the waste heat creates steam at a higher efficiency with the additional heat provided from the duct firing device.

10. The system of any of examples 8-9 wherein a standard efficiency curve does not take heat from the duct firing device into account, and wherein a difference between the standard efficiency curve and the corrected efficiency curve is magnified at a selected amount of gas turbine waste heat, $S_{GT}$.

11. The system of any of examples 8-10 wherein the difference is positive when the standard efficiency is less than the efficiency at $S_{GT}$ and negative when the standard efficiency is greater than the efficiency at $S_{GT}$.

12. The system of any of examples 8-11, wherein the controller utilizes an equivalency model of duct firing that is defined as:

$$Q'_{S,DF} = Q_{S,DF} + Q_{S,\Delta GT} = \eta'(S_{tot}) \cdot Q_{in,DF}$$

where $Q'_{S,DF}$ is the amount of heat transformed into steam from duct firing with corrected efficiency, $Q_{S,DF}$ is the amount of heat transformed into steam from duct firing, $Q_{S,\Delta GT}$ is the amount of heat transformed into steam by increased efficiency of the heat from the gas turbine, $\eta'(S_{tot})$ is the corrected efficiency for the total of steam produced, and $Q_{in,DF}$ is the heat produced by duct firing..

13. The system of any of examples 8-12 wherein the corrected efficiency $\eta'$ is calculated in accordance with:

$$\eta' = \left[ \eta + (\eta - \eta_{GT}) \frac{Q_{in,GT}}{Q_{in,DF}} \right]$$

$$\eta_{GT} = \eta(S_{GT})$$

where $\eta$ is a standard efficiency without duct firing, $\eta_{GT}$ is the efficiency of the gas turbine, $Q_{in,GT}$ and $Q_{in,DF}$ are the input heat from the gas turbine and duct firing respectively.

14. A computer readable storage device having code to cause a computer to perform a method, the method comprising:

receiving sensed information corresponding to waste heat input and resulting produced steam;
determining via a programmed computer, an efficiency for a heat recovery steam generator without duct firing at a selected waste heat input level; and
decoupling effects from the waste heat with heat from duct firing to create an efficiency model for duct firing via the programmed computer by magnifying a difference between the efficiency without duct firing at the selected waste heat input level.

15. The method of example 14 and further comprising using the efficiency model for duct firing to program a controller to control a duct firing device.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method of controlling duct firing of a combined cycle unit, the method comprising:

receiving waste heat from a gas turbine;
adding heat via duct firing;
using the received waste heat and added heat via duct firing to create steam;

driving a steam turbine with the created steam;

powering an electrical generator via the steam turbine; and

receiving sensed information corresponding to the waste heat from the gas turbine (110) and the resulting created steam;

determining an efficiency for a heat recovery steam generator without duct firing at a selected waste heat input level; and

decoupling effects from the waste heat with heat from duct firing to determine an efficiency model for duct firing by magnifying a difference between the efficiency without duct firing and efficiency with duct firing at the selected waste heat input level.

2. The method of claim 1 wherein the difference is positive when the determined efficiency without duct firing is less than the efficiency with duct firing at the selected waste heat input level and negative when the determined efficiency without duct firing is greater than the efficiency with duct firing a tthe selected waste heat input level.

3. The method of any one of claims 1-2, wherein the efficiency model with duct firing is defined as:

$$Q'_{S,DF} = Q_{S,DF} + Q_{S,\Delta GT} = \eta'(S_{tot}) \cdot Q_{in,DF}$$

where $Q'_{S,DF}$ is the amount of heat transformed into steam from duct firing with a corrected efficiency, $Q_{S,DF}$ is the amount of heat transformed into steam from duct firing, $Q_{S,\Delta GT}$ is the amount of heat transformed into steam by increased efficiency of the heat from the gas turbine (110), $\eta'(S_{tot})$ is the corrected efficiency for the total of steam produced, and $Q_{in,DF}$ is the heat produced by duct firing.

4. The method of any preceding claim wherein controlling the duct firing is performed by a specifically programmed computer.

5. The method of claim 3 wherein the corrected efficiency $\eta'$ is calculated in accordance with:

$$\eta' = \left[ \eta + (\eta - \eta_{GT}) \frac{Q_{in,GT}}{Q_{in,DF}} \right]$$

$$\eta_{GT} = \eta(S_{GT})$$

where $\eta$ is the determined efficiency without duct firing, $\eta_{GT}$ is the efficiency of the gas turbine (110), $Q_{in,GT}$ and $Q_{in,DF}$ are the input heat from the gas turbine and duct firing respectively.

6. The method of any preceding claim, including controlling the duct firing to optimize the load allocated to a combined cycle unit including the gas turbine (110) and heat recovery steam generator against other combined cycle units available in a steam plant to optimize the overall steam plant performance as a function of the efficiency model

7. A combined cycle unit comprising a system comprising:

a heat recovery steam generator comprising:

a duct to receive waste heat from a gas turbine (110);
a duct firing device coupled to the duct to add heat to the waste heat via duct firing;
a steam generator (127) to use the received waste heat and added heat via duct firing to create steam;
a steam turbine (135) coupled to the steam generator; and
an electrical generator (150) coupled to the steam turbine; and

a controller (170) to receive sensed information corresponding to the waste heat and the created steam, to determine an efficiency for a heat recovery steam generator without duct firing at a selected waste heat input level, and to decouple effects from the waste heat with heat from duct firing to determine an efficiency model for duct firing by magnifying a difference between the efficiency without duct firing and efficiency with duct firing at the selected waste heat input level.

8. The unit of claim 7, wherein the difference is positive when the determined efficiency without duct firing is less than the efficiency with duct firing at the selected waste heat input level and negative when the determined efficiency without duct firing is greater than the efficiency with duct firing at the selected waste heat input level.

9. The unit of claim 7 or claim 8, wherein the controller (170) is adapted to determine the efficiency model for duct firing as:

$$Q'_{S,DF} = Q_{S,DF} + Q_{S,\Delta GT} = \eta'(S_{tot}) \cdot Q_{In,DF}$$

where $Q'_{S,DF}$ is the amount of heat transformed into steam from duct firing with a corrected efficiency, $Q_{S,DF}$ is the amount of heat transformed into steam from duct firing, $Q_{S,\Delta GT}$ is the amount of heat transformed into steam by increased efficiency of the heat from the gas turbine (110), $\eta'(S_{tot})$ is the corrected efficiency for the total of steam produced, and $Q_{in,DF}$ is the heat produced by duct firing..

10. The unit of claim 9, wherein controller (170) is adapted to calculate the corrected efficiency $\eta'$ in accordance with:

$$\eta' = \left[ \eta + (\eta - \eta_{GT}) \frac{Q_{in,GT}}{Q_{in,DF}} \right]$$

$$\eta_{...} = \eta(S_{...})$$

where $\eta$ is a standard efficiency without duct firing, $\eta_{GT}$ is the efficiency of the gas turbine (110), $Q_{in,GT}$ and $Q_{in,DF}$ are the input heat from the gas turbine (110) and duct firing respectively.

11. The unit of any one of claims 7 to 10, wherein the controller (170) is adapted to control the duct firing to optimize the load allocated to a combined cycle unit including the gas turbine (110) and the heat recovery steam generator against other generators available in a steam plant to optimize the overall steam plant performance as a function of the efficiency model.

**Patentansprüche**

1. Verfahren zum Steuern von Zusatzfeuerung im Abhitzedampferzeuger einer GuD-Einheit, wobei das Verfahren umfasst:

Erhalten von Abhitze von einer Gasturbine;
Zufügen von Hitze mittels Zusatzfeuerung im Abhitzedampferzeuger ("Duct Firing");
Verwenden der erhaltenen Abhitze und mittels Zusatzfeuerung im Abhitzedampferzeuger zugefügten Hitze zur Dampferzeugung;
Antreiben einer Dampfturbine mit dem erzeugten Dampf;
Antreiben eines Stromgenerators über die Dampfturbine; und
Erhalten von abgefühlten Informationen, die der Abhitze von der Gasturbine (110) und dem resultierenden erzeugten Dampf entsprechen;
Bestimmen einer Effizienz für den Wärmerückgewinnungsdampfgenerator ohne Zusatzfeuerung im Abhitzedampferzeuger bei einem ausgewählten Abhitzeeingabeniveau; und
Entkoppeln der Effekte von der Abhitze mit Hitze durch die Zusatzfeuerung im Abhitzedampferzeuger, um ein Effizienzmodell für Zusatzfeuerung im Abhitzedampferzeuger zu bestimmen, indem eine Differenz zwischen der Effizienz ohne Zusatzfeuerung im Abhitzedampferzeuger und der Effizienz mit Zusatzfeuerung im Abhitzedampferzeuger bei dem ausgewählten Abhitzeeingabeniveau bestimmt wird.

**2.** Verfahren nach Anspruch 1, wobei die Differenz positiv ist, wenn die bestimmte Effizienz ohne Zusatzfeuerung im Abhitzedampferzeuger kleiner als die Effizienz mit Zusatzfeuerung im Abhitzedampferzeuger bei dem ausgewählten Abhitzeeingabeniveau ist, und negativ ist, wenn die bestimmte Effizienz ohne Zusatzfeuerung im Abhitzedampferzeuger größer als die Effizienz mit Zusatzfeuerung im Abhitzedampferzeuger bei dem ausgewählten Abhitzeeingabeniveau ist.

**3.** Verfahren nach einem der Ansprüche 1 bis 2, wobei das Effizienzmodell mit Zusatzfeuerung im Abhitzedampferzeuger definiert ist als:

$$Q'_{S,DF} = Q_{S,DF} + Q_{S\Delta GT} = \eta'(S_{tot}) \cdot Q_{in,DF}$$

wobei $Q'_{S,DF}$ die Menge der Hitze ist, die durch Zusatzfeuerung im Abhitzedampferzeuger mit einer korrigierten Effizienz in Dampf umgewandelt worden ist, $Q_{S,DF}$ die Menge der Hitze ist, die durch Zusatzfeuerung im Abhitzedampferzeuger in Dampf umgewandelt worden ist, $Q_{S,\Delta GT}$ die Menge an Hitze ist, die durch erhöhte Effizienz der Hitze aus der Gasturbine (110) in Dampf umgewandelt worden ist, $\eta'(S_{tot})$ die korrigierte Effizienz für den gesamt produzierten Dampf ist, und $Q_{in,DF}$ die durch Zusatzfeuerung im Abhitzedampferzeuger produzierte Hitze ist.

**4.** Verfahren nach einem der vorhergehenden Ansprüche, wobei das Steuern der Zusatzfeuerung im Abhitzedampferzeuger durch einen speziell programmierten Computer durchgeführt wird.

**5.** Verfahren nach Anspruch 3, wobei die korrigierte Effizienz $\eta'$ berechnet wird gemäß:

$$\eta' = \left[ \eta + (\eta - \eta_{GT}) \frac{Q_{in,GT}}{Q_{in,DF}} \right]$$

$$\eta_{GT} = \eta(S_{GT})$$

wobei $\eta$ die bestimmte Effizienz ohne Zusatzfeuerung im Abhitzedampferzeuger ist, $\eta_{GT}$ die Effizienz der Gasturbine (110) ist, $Q_{in,GT}$ und $Q_{in,DF}$ die Eingabehitze von der Gasturbine beziehungsweise von der Zusatzfeuerung im Abhitzedampferzeuger sind.

**6.** Verfahren nach einem der vorhergehenden Ansprüche, einschließlich Steuerung der Zusatzfeuerung im Abhitzedampferzeuger, um die Last, die einer GuD-Einheit zugewiesen wird, die die Gasturbine (110) und den Wärmerückgewinnungsdampfgenerator einschließt, gegenüber anderen GuD-Einheiten zu optimieren, die in der Dampfanlage vorhanden sind, um die Gesamtleistung der Dampfanlage als Funktion des Effizienzmodells zu optimieren.

**7.** GuD-Einheit, umfassend ein System, welches umfasst:

einen Wärmerückgewinnungsdampfgenerator, umfassend:

einen Kanal zum Erhalten von Abhitze aus einer Gasturbine (110);
eine Zusatzfeuerungsvorrichtung im Abhitzedampferzeuger, die an den Kanal gekoppelt ist, um der Abhitze mittels Zusatzfeuerung im Abhitzedampferzeuger Hitze zuzufügen;
einen Dampfgenerator (127), um die erhaltene Abhitze und mittels Zusatzfeuerung im Abhitzedampferzeuger zugefügte Hitze zu nutzen, um Dampf zu erzeugen;
eine Dampfturbine (135), die an den Dampfgenerator gekoppelt ist; und
einen Stromgenerator (150), der an die Dampfturbine gekoppelt ist; und

eine Steuerung (170), um abgefühlte Informationen zu erhalten, die der Abhitze und dem erzeugten Dampf entsprechen, um eine Effizienz für einen Wärmerückgewinnungsdampfgenerator ohne Zusatzfeuerung im Abhitzedampferzeuger bei einem ausgewählten Abhitzeeingabeniveau zu bestimmen und Effekte von der Abhitze mit Hitze durch Zusatzfeuerung im Abhitzedampferzeuger zu entkoppeln, um ein Effizienzmodell für Zusatzfeuerung im Abhitzedampferzeuger zu bestimmen, indem eine Differenz zwischen der Effizienz ohne Zusatzfeuerung im Abhitzedampferzeuger und der Effizienz mit Zusatzfeuerung im Abhitzedampferzeuger bei dem ausgewählten Abhitzeeingabeniveau vergrößert wird.

8.  Einheit nach Anspruch 7, wobei die Differenz positiv ist, wenn die bestimmte Effizienz ohne Zusatzfeuerung im Abhitzedampferzeuger kleiner als die Effizienz mit Zusatzfeuerung im Abhitzedampferzeuger bei dem ausgewählten Abhitzeeingabeniveau ist, und negativ ist, wenn die bestimmte Effizienz ohne Zusatzfeuerung im Abhitzedampferzeuger größer als die Effizienz mit Zusatzfeuerung im Abhitzedampferzeuger bei dem ausgewählten Abhitzeeingabeniveau ist.

9.  Einheit nach Anspruch 7 oder Anspruch 8, wobei die Steuerung (170) eingerichtet ist, um das Effizienzmodell für Zusatzfeuerung im Abhitzedampferzeuger zu bestimmen als:

$$Q'_{S,DF} = Q_{S,DF} + Q_{S\Delta GT} = \eta'(S_{tot}) \cdot Q_{in,DF}$$

wobei $Q'_{S,DF}$ die Menge der Hitze ist, die durch Zusatzfeuerung im Abhitzedampferzeuger mit einer korrigierten Effizienz in Dampf umgewandelt worden ist, $Q_{S,DF}$ die Menge der Hitze ist, die durch Zusatzfeuerung im Abhitzedampferzeuger in Dampf umgewandelt worden ist, $Q_{S,\Delta GT}$ die Menge an Hitze ist, die durch erhöhte Effizienz der Hitze aus der Gasturbine (110) in Dampf umgewandelt worden ist, $\eta'(S_{tot})$ die korrigierte Effizienz für den gesamten produzierten Dampf ist, und $Q_{in,DF}$ die durch Zusatzfeuerung im Abhitzedampferzeuger produzierte Hitze ist.

10. Einheit nach Anspruch 9, wobei die Steuerung (170) eingerichtet ist, um die korrigierte Effizienz $\eta'$ gemäß

$$\eta' = \left[ \eta + (\eta - \eta_{GT}) \frac{Q_{in,GT}}{Q_{in,DF}} \right]$$

$$\eta_{GT} = \eta(S_{GT})$$

zu berechnen, wobei $\eta$ die Standardeffizienz ohne Zusatzfeuerung im Abhitzedampferzeuger ist, $\eta_{GT}$ die Effizienz der Gasturbine (110) ist, $Q_{in,GT}$ und $Q_{in,DF}$ die Eingabehitze von der Gasturbine (110) beziehungsweise von der Zusatzfeuerung im Abhitzedampferzeuger sind.

11. Einheit nach einem der Ansprüche 7 bis 10, wobei die Steuerung (170) eingerichtet ist, um die Zusatzfeuerung im Abhitzedampferzeuger zu steuern, um die Last, die einer GuD-Einheit zugewiesen wird, die die Gasturbine (110) und den Wärmerückgewinnungsdampfgenerator einschließt, gegenüber anderen Generatoren zu optimieren, die in einer Dampfanlage vorhanden sind, um die Gesamtleistung der Dampfanlage als Funktion des Effizienzmodells zu optimieren.

**Revendications**

1.  Procédé de commande de chauffe en conduit d'une unité à cycle combiné, le procédé comportant les étapes consistant à :

    recevoir une chaleur résiduelle provenant d'une turbine à gaz ;
    ajouter de la chaleur via une chauffe en conduit ;
    utiliser la chaleur résiduelle reçue et la chaleur ajoutée via la chauffe en conduit pour créer de la vapeur ;
    actionner une turbine à vapeur avec la vapeur créée ;
    entraîner un générateur électrique via la turbine à vapeur ; et
    recevoir des informations détectées correspondant à la chaleur résiduelle provenant de la turbine (110) à gaz et la vapeur créée résultante ;
    déterminer un rendement pour un générateur de vapeur à récupération de chaleur sans chauffe en conduit à un niveau choisi d'introduction de chaleur résiduelle ; et
    découpler les effets issus de la chaleur résiduelle par rapport à la chaleur provenant de la chauffe en conduit afin de déterminer un modèle de rendement pour la chauffe en conduit en amplifiant une différence entre le rendement sans chauffe en conduit et le rendement avec chauffe en conduit au niveau choisi d'introduction de chaleur résiduelle.

2. Procédé selon la revendication 1, la différence étant positive lorsque le rendement déterminé sans chauffe en conduit est inférieur au rendement avec chauffe en conduit au niveau choisi d'introduction de chaleur résiduelle et négative lorsque le rendement déterminé sans chauffe en conduit est supérieur au rendement avec chauffe en conduit au niveau choisi d'introduction de chaleur résiduelle.

3. Procédé selon l'une quelconque des revendications 1 à 2, le modèle de rendement avec chauffe en conduit étant défini comme :

$$Q'_{S,DF} = Q_{S,DF} + Q_{S,\Delta GT} = \eta'(S_{tot}) \cdot Q_{in,DF}$$

où $Q'_{S,DF}$ est la quantité de chaleur transformée en vapeur issue de la chauffe en conduit avec un rendement corrigé, $Q_{S,DF}$ est la quantité de chaleur transformée en vapeur issue de la chauffe en conduit, $Q_{S,\Delta GT}$ est la quantité de chaleur transformée en vapeur par un rendement accru de la chaleur provenant de la turbine (110) à gaz, $\eta'(S_{tot})$ est le rendement corrigé pour le total de la vapeur produite, et $Q_{in,DF}$ est la chaleur produite par la chauffe en conduit.

4. Procédé selon l'une quelconque des revendications précédentes, la commande de la chauffe en conduit étant effectuée par un ordinateur spécifiquement programmé.

5. Procédé selon la revendication 3, le rendement corrigé $\eta'$ étant calculé selon :

$$\eta' = \left[ \eta + (\eta - \eta_{GT}) \frac{Q_{in,GT}}{Q_{in,DF}} \right]$$

$$\eta_{GT} = \eta(S_{GT})$$

où $\eta$ est le rendement déterminé sans chauffe en conduit, $\eta_{GT}$ est le rendement de la turbine (110) à gaz, $Q_{in,GT}$ et $Q_{in,DF}$ sont la chaleur introduite provenant respectivement de la turbine à gaz et de la chauffe en conduit.

6. Procédé selon l'une quelconque des revendications précédentes, comprenant la commande de la chauffe en conduit de façon à optimiser la charge attribuée à une unité à cycle combiné comprenant la turbine (110) à gaz et le générateur de vapeur à récupération de chaleur vis-à-vis d'autres unités à cycle combiné disponibles dans une centrale à vapeur pour optimiser les performances globales de la centrale à vapeur en fonction du modèle de rendement.

7. Unité à cycle combiné comportant un système comportant :

un générateur de vapeur à récupération de chaleur comportant :

un conduit servant à recevoir une chaleur résiduelle provenant d'une turbine (110) à gaz ;
un dispositif de chauffe en conduit couplé au conduit pour ajouter de la chaleur à la chaleur résiduelle via une chauffe en conduit ;
un générateur (127) de vapeur servant à utiliser la chaleur résiduelle reçue et la chaleur ajoutée via la chauffe en conduit pour créer de la vapeur ;
une turbine (135) à vapeur couplée au générateur de vapeur ; et
un générateur électrique (150) couplé à la turbine à vapeur ; et

une commande (170) servant à recevoir des informations détectées correspondant à la chaleur résiduelle et à la vapeur créée, à déterminer un rendement pour un générateur de vapeur à récupération de chaleur sans chauffe en conduit à un niveau choisi d'introduction de chaleur résiduelle, et à découpler les effets issus de la chaleur résiduelle par rapport à la chaleur provenant de la chauffe en conduit afin de déterminer un modèle de rendement pour la chauffe en conduit en amplifiant une différence entre le rendement sans chauffe en conduit et le rendement avec chauffe en conduit au niveau choisi d'introduction de chaleur résiduelle.

8. Unité selon la revendication 7, la différence étant positive lorsque le rendement déterminé sans chauffe en conduit est inférieur au rendement avec chauffe en conduit au niveau choisi d'introduction de chaleur résiduelle et négative lorsque le rendement déterminé sans chauffe en conduit est supérieur au rendement avec chauffe en conduit au niveau choisi d'introduction de chaleur résiduelle.

9. Unité selon la revendication 7 ou claim 8, la commande (170) étant prévue pour déterminer le modèle de rendement de la chauffe en conduit comme :

$$Q'_{S,DF} = Q_{S,DF} + Q_{S,\Delta GT} = \eta'(S_{tot}) \cdot Q_{in,DF}$$

où $Q'_{S,DF}$ est la quantité de chaleur transformée en vapeur issue de la chauffe en conduit avec un rendement corrigé, $Q_{S,DF}$ est la quantité de chaleur transformée en vapeur issue de la chauffe en conduit, $Q_{S,\Delta GT}$ est la quantité de chaleur transformée en vapeur par un rendement accru de la chaleur provenant de la turbine (110) à gaz, $\eta'(S_{tot})$ est le rendement corrigé pour le total de la vapeur produite, et $Q_{in,DF}$ est la chaleur produite par la chauffe en conduit.

10. Unité selon la revendication 9, la commande (170) étant prévue pour calculer le rendement corrigé $\eta'$ selon :

$$\eta' = \left[ \eta + (\eta - \eta_{GT}) \frac{Q_{in,GT}}{Q_{in,DF}} \right]$$

$$\eta_{GT} = \eta(S_{GT})$$

où $\eta$ est un rendement standard sans chauffe en conduit, $\eta_{GT}$ est le rendement de la turbine (110) à gaz, $Q_{in,GT}$ et $Q_{in,DF}$ sont la chaleur introduite provenant respectivement de la turbine (110) à gaz et de la chauffe en conduit.

11. Unité selon l'une quelconque des revendications 7 à 10, la commande (170) étant prévue pour commander la chauffe en conduit de façon à optimiser la charge attribuée à une unité à cycle combiné comprenant la turbine (110) à gaz et le générateur de vapeur à récupération de chaleur vis-à-vis d'autres générateurs disponibles dans une centrale à vapeur pour optimiser les performances globales de la centrale à vapeur en fonction du modèle de rendement.

**FIG. 1**

FIG. 2

FIG. 3

FIG. 4

FIG. 5

**FIG. 6**

EP 2 806 114 B1

**EP 2 806 114 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4478039 A